# EUROPEAN PATENT SPECIFICATION

(11) **EP 1 099 848 B1**
(45) Date of publication and mention of the grant of the patent: **01.06.2005**
(21) Application number: 00124072.0
(22) Date of filing: 06.11.2000
(51) Int. Cl.: F02M 37/00, F16L 55/05

(54) **Damper containing internal lubricant**
Schmierstoffenthaltender Dämpfer
Amortisseur comportant un lubrifiant interne

(30) Priority: 12.11.1999 US 423573
(43) Date of publication of application: 16.05.2001
(73) Proprietor: Siemens VDO Automotive Corporation, Auburn Hills, Michigan 48326-2980 (US)
(72) Inventor: Kilgore, Jason T., Newport News, VA 23601 (US); Cecelic, Joseph K., Newport News, VA 23808 (US)
(74) Representative: Condon, Neil

(56) References cited:
- DE-A- 3 446 324
- FR-A- 2 125 847
- US-A- 5 820 227

## Description

### Field of Invention

This invention relates to a damper for automotive fuel systems, and more particularly, a damper for minimizing fuel pressure pulsations in a fuel rail.

### Background of Invention

Existing fuel delivery systems which use an in-tank fuel pressure regulator usually employ an energy absorbing device mounted on or near the fuel rail. The energy absorbing device serves to compensate for fuel pressure pulsations created in the fuel rail that occur as a result of sequential firing of fuel injectors operatively connected to the fuel rail. A known energy absorbing device is a damper mounted on the fuel rail. A damper of this type is disclosed in commonly-assigned U.S. Patent No. 6.032.651, entitled "Fuel Rail Damper," filed May 28, 1998. This known damper has an upper chamber and a lower chamber separated by a solid, flexible diaphragm. The upper chamber contains a spring that biases the diaphragm toward the lower chamber. The spring is retained in a spring seat, which engages the diaphragm. The lower chamber has an opening which allows fuel to enter from the fuel rail and contact the diaphragm. Changes in fuel pressure cause the diaphragm to adjust the volumetric capacity of the lower chamber to damp the fuel pressure changes.

Applicants have discover that over prolonged periods of operation, the known damper can exhibit reduced operative capacity. As the diaphragm adjusts the volume of the lower chamber, the spring seat reciprocates within the upper chamber. While reciprocating in the upper chamber, the spring seat can become galled from contacting the upper chamber, even though the spring seat is sized to minimize contact with the upper chamber. It is believed that a spring seat with galled surfaces can reduce operability of the damper. Thus, a damper arrangement is needed which can, under prolonged operative conditions, maintain a stable damping coefficient.

### Summary of the Invention

The present invention provides a fuel system damper, comprising: a first chamber having an interior surface; a second chamber having a fuel receiving opening; a diaphragm separating the first chamber and the second chamber; a device disposed within the first chamber that biases the diaphragm toward the fuel receiving opening; a retainer supporting the device proximate the diaphragm, the retainer having a surface exposed to the interior surface of the first chamber; and characterised by a lubricant disposed on at least one of the interior surface of the first chamber and the surface of the retainer, to reduce frictional forces between these surfaces.

In a preferred embodiment, the retainer is a spring seat and the device biasing the diaphragm is a spring. The seat is a cup-shaped member having a lateral side surface exposed to the interior surface of the first chamber. The lubricant is disposed to the lateral side surface, and is, preferably, disposed on the later side surface by a lubricity additive of a plating disposed on the lateral side surface.

The present invention also provides a method of damping pressure pulsations in a fuel system comprising the steps of: separating a housing into a first chamber and a second chamber with a diaphragm; providing the second chamber having a fuel receiving opening; disposing a device in the first chamber that biases the diaphragm toward the fuel receiving opening; supporting the device proximate the diaphragm with a retainer; and characterised by providing lubricant between the retainer and the first chamber, to reduce frictional forces between the two.

### Brief Description of the Drawings

The accompanying drawing, which is incorporated herein and constitutes part of this specification, illustrates a presently preferred embodiment of the invention, and, together with the general description given above and the detailed description given below, serve to explain features of the invention.

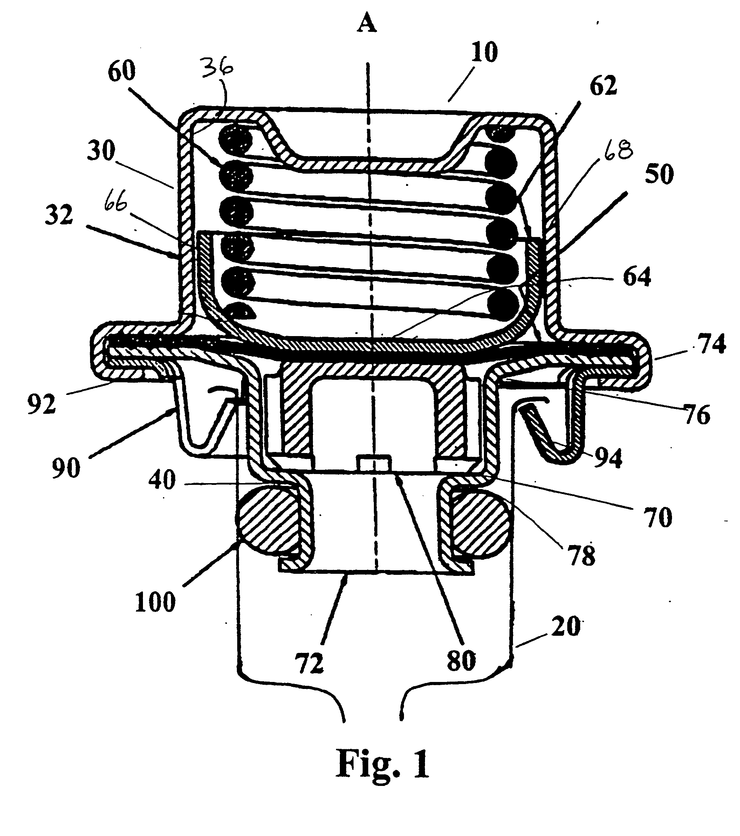

Fig. 1 is a cross-sectional view of an embodiment of the damper of the present invention.

### Detailed Description of the Preferred Embodiment

Fig. 1 illustrates a preferred embodiment of the damper 10 that attenuates pressure pulsations in a fuel system. The damper 10 is, preferably, an assembly of components operatively attached to a fuel rail (not shown) by a fuel rail cup 20. The damper 10 includes an upper chamber 30, a first chamber, and the lower chamber 40, a second chamber. The upper chamber 30 and the lower chamber 40 are separated by a flexible diaphragm 50 within the damper assembly. The diaphragm 50 is secured in place between the upper chamber 30 and lower chamber 40. The upper chamber 30 is formed by a first member of the assembly, which is, preferably, a cover 32 that creates a sealed chamber with the diaphragm 50. A biasing device, which is, preferably, a spring 60 and, a retainer for the biasing device, which is, preferably, a spring seat 62, are disposed in the upper chamber 30. The spring seat 62 engages the diaphragm 50 so that the spring 60 biases the diaphragm 50 toward the lower chamber 40.

The lower chamber 40 is formed by a second member of the damper assembly, which is preferably, a housing 70. Although the damper assembly in the preferred embodiment is provided by two separate members, cover 32 and housing 70, a unitary member could be provided. The lower end of the housing 70 has an opening 72, a fuel receiving opening, which allows fuel to enter the damper 10 from the fuel system. The upper end of the housing 70 has a flange 74 that supports the diaphragm 50. The flange 74 is surrounded by a flange 34 of cover 32. A portion of the flange 74 projects inwardly to provide a radial shoulder 76. The radial shoulder 76 allows for a maximum effective area of the diaphragm 50 to be exposed to fuel in the lower chamber 40.

A spacer 80 is disposed in the lower chamber 40 and contacts a seat 78 formed in the housing 70. The seat 78 limits axial movement of the spacer 80 toward the opening 72. The force of spring 60 limits axial movement of the spacer 80 toward the cover 32. The height of the spacer 80, in the axial direction along the longitudinal axis A, is greater than the distance between the seat 78 and an inner edge of the radial shoulder 76, and, preferably, is greater than the distance between the seat 78 and the flange 74. The spacer 80, therefore, prevents contact between the diaphragm 50 and the radial shoulder 76. Because contact is prevented between the diaphragm 50 and the radial shoulder 76, the diaphragm 50 does not adhere to the radial shoulder 76, even after prolonged exposure to heat and fuel. By avoiding contact with the radial shoulder 76, a maximum effective area of the diaphragm 50 is continually exposed to the lower chamber 40. Further details of the spacer 80, and its operative performance within the damper 10, is explained in co-pending application U.S. Patent No. 6.230.685B entitled "Pressure Pulsation Damper with Free Floating Spacer," filed on even date.

The damper 10 is attached to the fuel cup 20 by a clip 90 comprising a support portion 92 on an outer diameter and a plurality of retention members 94 on an inner diameter. Further details of this clip are disclosed in commonly-assigned, co-pending U.S. Patent No. 6.227.785 B entitled "A Self-Tightening Clip," filed June 29, 1999. The support portion 92 of the clip 90 is disposed between the flange 74 of the housing 70 and the flange 34 of the cover 32. The clip retention members 94 extend over a lip on the fuel cup 20 to maintain the damper 10 in place on the fuel cup 20. An 0-ring 100, disposed on the housing 70, provides a seal between the damper 10 and the fuel cup 20.

During operation of the damper 10, the spring seat 62 reciprocates along the longitudinal axis A. The spring seat 62, which serves as the preferred retainer, is a cup-shaped member having a diaphragm engagement face 64. The engagement face 64 is connected to a lateral side surface 66 by a rounded outer edge 68. The engagement face 64 of the spring seat 62 and a surface of the spacer 80 provide opposing structural members that apply opposite axial loads along longitudinal axis A to the diaphragm 50. The engagement face 64 has a contact area less than the effective contact area of the diaphragm 50, due to the rounded outer edge 68. By providing the engagement face 64 with this configuration, the spring seat 62 biases the diaphragm 50 without biasing the spring seat 62 against the radial shoulder.

Reciprocation of the spring seat 62, reciprocates lateral side surface 66 of the spring seat 62 relative to an interior surface 36 of the cover 32. The lateral side surface 66 of the spring seat 62 and the interior surface 36 of the cover 32 are, preferably, planar surfaces that extend substantially parallel to the longitudinal axis A. In the preferred embodiment, the lateral side surface 66 and the interior surface 36 have a corresponding circumferential configuration, which is, preferably, circular, although other corresponding circumferential configuration could be employed. The corresponding circumferential configuration of the lateral side surface 66 and the interior surface 36 allows for a compact damper assembly. Even though the spring seat 62 is sized so that the lateral side surface 66 should avoid contact with the interior surface 36 of the cover 32, applicants have discover that under particular operative conditions, the damper 10 can demonstrate a reduced damping capacity because of frictional forces developed when the lateral side surface 66 contacts the interior surface 36. Prolonged contact between the lateral side surface 66 and the interior surface 36 cause frictional forces that can gall the metallic material employed selected for these surfaces, which can result in a permanent reduction in the operative capacity of the damper 10.

In order to minimize the frictional contact between the lateral side surface 66 and the interior surface 36, a method of lubricating at least one of these internal surfaces is provided. For example, a lubricant is provided on at least one of the lateral side surface 66 or the interior surface 36. In addition to providing an arrangement that minimizes frictional contact between the lateral side surface 66 and the interior surface 36, and, thus, prevents galling of the lateral side surface 66 and the interior surface 36, lubrication of at least one of these surfaces within the damper, also, advantageously, improves the performance of the damper 10 during various operative conditions. Time interval performance tests have demonstrated at least a twenty percent increase in the damping coefficient of the damper of the preferred embodiment with internal surface lubrication as compared to a damper of the preferred embodiment without internal surface lubrication.

The selected method of lubricating the lateral side surface 66 or the internal surface 36 provides for internal surface lubrication of the damper assembly. The internal surface lubrication of the damper assembly can be achieved by various arrangements, each of which provides alternative embodiments of the damper 10. It is to be understood that each of the various arrangements that provide a method of internal surface lubrication could be employed singularly or in a combination thereof. To provide lubrication of the specified surfaces, the lateral side surface 66 and the interior surface 36, any medium that reduces frictional forces between the specified surfaces can be employed. The medium could be, for example, oil, grease, or a lubricity additive in an appropriate material exposed to at least one of the specified surfaces. The medium should at least provide a thin layer of a lubricating substance on at least one of the specified surfaces. That is, if an oil or grease is used as the medium, a thin layer of the selected oil or grease is applied to at least one of the lateral side surface 66 and the interior surface 36, and, in particular, the lateral side surface 66. If a material with the lubricity additive is employed as the medium, the material that contains the lubricity additive could be the material employed to form at least one of the spring seat 62 and the cover 32, or a plating applied to at least one of the specified surfaces, the lateral side surface 66 or the interior surface 36, as long as during relative movement of the specified surfaces, the selected material provides a thin layer of a lubricating substance to at least one of the specified surface. An example of such a material, which could be used as the material to form one of the spring seat 62 or the cover 32 and provide a lubricating substance to at least one of the specified surfaces, is an oil impregnated steel. In the preferred embodiment, the medium is a plating of electroless nickel with Teflon, polytetrafluoroethylene, additives. The plating 68 is applied to spring seat 62 so that the at least lateral side surface 66 is covered. The nickel plated spring seat 62 is, preferably, formed from a stainless steel.

While the invention has been disclosed with reference to certain preferred embodiments, numerous modifications, alterations, and changes to the described embodiments are possible without departing from the sphere and scope of the invention, as defined in the appended claims. Accordingly, it is intended that the invention not be limited to the described embodiments, but that it have the full scope defined by the language of the following claims.

## Claims

1. A fuel system damper (10), comprising:
a first chamber (30) having an interior surface (36);
a second chamber (40) having a fuel receiving opening (72);
a diaphragm (50) separating the first chamber (30) and the second chamber (40);
a device (60) disposed within the first chamber (30) that biases the diaphragm (50) toward the fuel receiving opening (72);
a retainer (62) supporting the device (60) proximate the diaphragm (50), the retainer (62) having a surface (66) exposed to the interior surface (36) of the first chamber (30); and **characterised by**
a lubricant disposed on at least one of the interior surface (36) of the first chamber (30) and the surface of the retainer (62), to reduce frictional forces between these surfaces.

2. The damper (10) of claim 1, wherein the retainer (62) comprises a seat.

3. The damper (10) of claim 2, wherein the seat (62) comprises a cup-shaped member having a lateral side surface (66) exposed to the interior surface (36) of the first chamber (30).

4. The damper (10) of claim 3, wherein the lubricant is disposed on the lateral side surface (66) of the seat (62).

5. The damper (10) of claim 4, wherein the lubricant comprises an additive of a plating (68) disposed on the lateral side surface (66).

6. The damper (10) of claim 1, wherein the device (60) that biases the diaphragm (50) comprises a spring and; wherein the retainer (62) comprises a spring seat having a face (64) that engages the diaphragm (50) and a lateral side surface (66), the face (64) having a contact area less than an effective area of the diaphragm (50), the lateral side surface (66) providing the surface of the retainer exposed to the interior surface (36).

7. The damper (10) of claim 1, further comprising a spacer (80) disposed in the second chamber (40) that maintains a maximum effective area of the diaphragm (50).

8. The damper (10) of claim 1, wherein the lubricant comprises at least one of an oil, grease, and a lubricity additive in a material.

9. The damper (10) of claim 1, further comprising a housing that provides the first chamber (30) and the second chamber (40).

10. The damper (10) of claim 9, wherein the housing includes a retention device (90), the retention device (90) being configured to secure the damper (10) to a fuel rail cup (20).

11. The damper (10) of claim 10, wherein the retention device (90) comprises a sheet metal clip integrally attached to the housing.

12. The damper (10) of claim 11, wherein the housing comprises a first member that provides the first chamber (30) and a second member that provides the fuel receiving opening (72), the first member including a first flange, the second member including a second flange; and
wherein the clip (90) includes a support portion (92) and a plurality of retention members (94), the support portion (92) being disposed between the first flange and the second flange, and the plurality of retention members (94) extending from the support portion (92) toward the fuel receiving opening (72).

13. The damper (10) of claim 12, wherein the second chamber (40) comprises an inwardly angled radial shoulder adjacent the diaphragm (50).

14. A method of damping pressure pulsations in a fuel system comprising the steps of:
separating a housing into a first chamber (30) and a second chamber (40) with a diaphragm (50);
providing the second chamber (40) having a fuel receiving opening (72);
disposing a device (60) in the first chamber (30) that biases the diaphragm (50) toward the fuel receiving opening (72);
supporting the device (60) proximate the diaphragm (50) with a retainer (62); and **characterised by**
providing lubricant between the retainer (62) and the first chamber (30), to reduce frictional forces between the two.

15. The method of claim 14, further comprising the steps of:
providing a cup-shaped member as the retainer (62), the cup-shaped member having a lateral side surface (66) exposed to an interior surface (36) of the first chamber (30).

16. The method of claim 15, further comprising the step of:
providing a plating (68) with a lubricity additive on the lateral side surface (66).

17. The method of claim 15, further comprising the step of:
providing the retainer (62) with a face (64) that engages the diaphragm (50), the face (64) having a contact area less than an effective area of the diaphragm (50).

18. The method of claim 14, further comprising the step of:
disposing a spacer (80) in the second chamber (40) that maintains a maximum effective area of the diaphragm (50).

19. The method of claim 14, further comprising the step of:
providing at least one of an oil, grease, and a lubricity additive in a material as the lubricant.

20. The method of claim 14, further comprising the steps of:
providing for the first chamber (30) with a first member of a housing;
providing the second chamber (40) with a second member of a housing; and
disposing a support portion (92) of a clip (90) between a first flange of the first member and a second flange of the second member so that a plurality of retention members (94) of the clip (90) extend from a support member toward the fuel receiving opening (72).

## Patentansprüche

1. Kraftstoffsystemdämpfer (10), der Folgendes umfasst:
eine erste Kammer (30) mit einer Innenfläche (36);
eine zweite Kammer (40) mit einer Kraftstoffaufnahmeöffnung (72);
eine Membran (50), die die erste Kammer (30) von der zweiten Kammer (40) trennt;
eine in der ersten Kammer (30) angeordnete Vorrichtung (60), die die Membran (50) in Richtung der Kraftstoffaufnahmeöffnung (72) verformt;
eine Aufnahme (62), die die Vorrichtung (60) an der Membran (50) stützt, wobei die Aufnahme (62) eine Fläche (66) aufweist, die zur Innenfläche (36) der ersten Kammer (30) gerichtet ist; und
**gekennzeichnet durch**
ein Schmiermittel, das auf mindestens einer der Flächen, d. h. der Innenfläche (36) der ersten Kammer (30) und/oder der Oberfläche der Aufnahme (62) angeordnet ist, um die Reibungskräfte zwischen diesen Flächen zu verringern.

2. Dämpfer (10) nach Anspruch 1, wobei die Aufnahme (62) einen Sitz beinhaltet.

3. Dämpfer (10) nach Anspruch 2, wobei der Sitz (62) ein tassenartiges Element umfasst, das eine seitliche Längsfläche (66) aufweist, die zur Innenfläche (36) der ersten Kammer (30) gerichtet ist.

4. Dämpfer (10) nach Anspruch 3, wobei das Schmiermittel auf der seitlichen Längsfläche (66) des Sitzes (62) angeordnet ist.

5. Dämpfer (10) nach Anspruch 4, wobei das Schmiermittel eine Beschichtung (68) mit einem Additiv umfasst, die auf der seitlichen Längsfläche (66) angeordnet ist.

6. Dämpfer (10) nach Anspruch 1, wobei die Vorrichtung (60), die die Membran (50) verformt, eine Feder beinhaltet und; wobei die Aufnahme (62) einen Federsitz mit einer Fläche (64) beinhaltet, die auf die Membran (50) und eine seitliche Längsfläche (66) einwirkt, wobei die Fläche (64) eine Kontaktfläche aufweist, die kleiner ist als die Wirkfläche der Membran (50), wobei die seitliche Längsfläche (66) die Oberfläche der Aufnahme bildet, die zur Innenfläche (36) gerichtet ist.

7. Dämpfer (10) nach Anspruch 1, der ferner ein Distanzstück (80) beinhaltet, das in der zweiten Kammer (40) angebracht ist und eine maximale Wirkfläche der Membran (50) sicherstellt.

8. Dämpfer (10) nach Anspruch 1, wobei das Schmiermittel aus zumindest einem der Stoffe Öl und/oder Fett und einem Schmieradditiv in einem Material besteht.

9. Dämpfer (10) nach Anspruch 1, der ferner ein Gehäuse umfasst, das die erste Kammer (30) und die zweite Kammer (40) bereitstellt.

10. Dämpfer (10) nach Anspruch 9, wobei das Gehäuse eine Spange (90) umfasst, wobei die Spange (90) so angeordnet ist, dass sie den Dämpfer (10) an einer Kappe (20) an der Kraftstoffverteilung befestigt.

11. Dämpfer (10) nach Anspruch 10, wobei die Spange (90) eine Blechspange enthält, die als fester Bestandteil am Gehäuse angebracht ist.

12. Dämpfer (10) nach Anspruch 11, wobei das Gehäuse ein erstes Element enthält, das die erste Kammer (30) bildet, und ein zweites Element, das die Kraftstoffaufnahmeöffnung (72) bildet, wobei das erste Element einen ersten Flansch umfasst, das zweite Element einen zweiten Flansch umfasst; und
wobei die Spange (90) ein Stützteil (92) und eine Vielzahl von Halteelementen (94) beinhaltet, wobei das Stützteil (92) zwischen dem ersten Flansch und dem zweiten Flansch angeordnet ist, und sich die Vielzahl der Halteelemente (94) vom Stützteil (92) in Richtung der Kraftstoffaufnahmeöffnung (72) erstreckt.

13. Dämpfer (10) nach Anspruch 12, wobei die zweite Kammer (40) eine nach innen gebogene radiale Schulter an der Membran (50) beinhaltet.

14. Verfahren zur Dämpfung der Druckpulsationen in einem Kraftstoffsystem, das folgende Schritte umfasst:
Trennung eines Gehäuses in eine erste Kammer (30) und eine zweite Kammer (40) mittels einer Membran (50);
Bereitstellung der zweiten Kammer (40), die mit einer Kraftstoffaufnahmeöffnung (72) versehen ist;
Anordnung einer Vorrichtung (60) in der ersten Kammer (30), die die Membran (50) in Richtung der Kraftstoffaufnahmeöffnung (72) verformt;
Stützung der Vorrichtung (60) an der Membran (50) mittels einer Aufnahme (62); und **gekennzeichnet durch**
Auftragen eines Schmiermittels zwischen der Aufnahme (62) und der ersten Kammer (30), um die Reibungskräften zwischen diesen beiden Elementen zu verringern.

15. Verfahren nach Anspruch 14, das ferner die folgenden Schritte umfasst:
Bereitstellung eines tassenförmigen Elements als Aufnahme (62), wobei das tassenförmige Element eine seitliche Längsfläche (66) aufweist, die zu einer Innenfläche (36) der ersten Kammer (30) gerichtet ist.

16. Verfahren nach Anspruch 15, das ferner den folgenden Schritte umfasst:
Bereitstellung einer Beschichtung (68) mit einem Schmieradditiv auf der seitlichen Längsfläche (66).

17. Verfahren nach Anspruch 15, das ferner den folgenden Schritt umfasst:
Bereitstellung der Aufnahme (62) mit einer Fläche (64), die auf die Membran (50) einwirkt, wobei die Fläche (64) eine Kontaktfläche aufweist, die kleiner als die Wirkfläche der Membran (50) ist.

18. Verfahren nach Anspruch 14, das ferner den folgenden Schritt umfasst:
Anordnung eines Distanzstücks (80) in der zweiten Kammer (40), damit eine maximale Wirkfläche der Membran (50) sichergestellt ist.

19. Verfahren nach Anspruch 14, das ferner den folgenden Schritt umfasst:
Bereitstellung von mindestens einem der Stoffe Öl und/oder Fett und einem Schmieradditiv in einem Material als Schmiermittel.

20. Verfahren nach Anspruch 14, das ferner die folgenden Schritte umfasst:
Bereitstellung einer ersten Kammer (30) mit einem ersten Element eines Gehäuses;
Bereitstellung einer zweiten Kammer (40) mit einem zweiten Element eines Gehäuses; und
Anordnung eines Stützteils (92) einer Spange (90) zwischen einem ersten Flansch des ersten Elements und einem zweiten Flansch des zweiten Elements, so dass sich eine Vielzahl von Halteelementen (94) der Spange (90) von einem Stützelement in Richtung der Kraftstoffaufnahmeöffnung (72) erstreckt.

## Revendications

1. Un amortisseur (10) pour système d'alimentation en carburant, comprenant :
une première chambre (30) ayant une surface intérieure (36) ;
une seconde chambre (40) présentant une ouverture d'admission du carburant (72) ;
un diaphragme (50) séparant la première chambre (30) de la seconde chambre (40) ;
un dispositif (60) disposé à l'intérieur de la première chambre (30) qui comprime le diaphragme (50) vers l'ouverture d'admission du carburant (72) ;
une coupelle de retenue (62) soutenant le dispositif (60) à proximité du diaphragme (50), la coupelle de retenue (62) ayant une surface (66) exposée vers la surface intérieure (36) de la première chambre (30) ;
et **caractérisé par**
l'application d'un lubrifiant sur l'une au moins des surfaces étant la surface intérieure (36) de la première chambre (30) et la surface de la coupelle de retenue (62), afin de réduire les forces de frottement entre lesdites surfaces.

2. L'amortisseur (10) selon la revendication 1, dans lequel la coupelle de retenue (62) comporte un siège.

3. L'amortisseur (10) selon la revendication 2, dans lequel le siège (62) comporte un élément façonné en coupelle ayant une surface latérale (66) exposée vers la surface intérieure (36) de la première chambre (30).

4. L'amortisseur (10) selon la revendication 3, dans lequel le lubrifiant est appliqué sur la surface latérale (66) du siège (62).

5. L'amortisseur (10) selon la revendication 4, dans lequel le lubrifiant comporte un dépôt avec un additif (68) appliqué sur la surface latérale (66).

6. L'amortisseur (10) selon la revendication 1, dans lequel le dispositif (60) comprimant le diaphragme (50) comporte un ressort, et dans lequel la coupelle de retenue (62) comporte un siège de ressort ayant une face (64) faisant contact avec le diaphragme (50) et une surface latérale (66), la face (64) présentant une zone de contact plus petite que la surface utile du diaphragme (50), la surface latérale (66) étant la surface de la coupelle exposée vers la surface intérieure (36).

7. L'amortisseur (10) selon la revendication 1, comprenant en outre une bague d'espacement (80) disposée dans la seconde chambre (40), maintenant une surface utile maximale du diaphragme (50).

8. L'amortisseur (10) selon la revendication 1, dans lequel le lubrifiant contient au moins l'un des éléments suivants étant une huile, une graisse et un additif incorporé à un matériau.

9. L'amortisseur (10) selon la revendication 1, comprenant en outre un logement assurant la première chambre (30) et la seconde chambre (40).

10. L'amortisseur (10) selon la revendication 9, dans lequel le logement comprend un dispositif de retenue (90), ledit dispositif de retenue (90) étant configuré pour fixer l'amortisseur (10) à une coupelle de rampe d'alimentation en carburant (20).

11. L'amortisseur (10) selon la revendication 10, dans lequel le dispositif de retenue (90) comporte un collier de serrage en tôle métallique intégralement fixé au logement.

12. L'amortisseur (10) selon la revendication 11, dans lequel le logement comprend un premier élément formant première chambre (30) et un second élément permettant l'ouverture d'admission du carburant (72), le premier élément comprenant une première collerette, le second élément comprenant une seconde collerette ;
et sur lequel le collier de serrage (90) comprend une portion de soutien (92) et plusieurs éléments de retenue (94), la portion de soutien (92) étant disposée entre la première collerette et la seconde collerette, et les divers éléments de retenue (94) s'étendant au départ de la portion de soutien (92) vers l'ouverture d'admission du carburant (72).

13. L'amortisseur (10) selon la revendication 12, dans lequel la seconde chambre (40) comprend un épaulement radial formant un angle vers l'intérieur et adjacent au diaphragme (50).

14. Une méthode d'atténuation des pulsations de pression dans un système d'alimentation en carburant, comportant les étapes de :
séparation d'un logement en une première chambre (30) et une seconde chambre (40) au moyen d'un diaphragme (50) ;
aménagement de la seconde chambre (40) ayant une ouverture d'admission du carburant (72) ;
mise en place, à l'intérieur de la première chambre (30), d'un dispositif (60) comprimant le diaphragme (50) vers l'ouverture d'admission du carburant (72) ;
installation d'un support au dispositif (60) à proximité du diaphragme (50) au moyen d'une coupelle de retenue (62) ;
et **caractérisée par** l'introduction d'un lubrifiant entre la coupelle de retenue (62) et la première chambre (30) pour réduire les forces de frottement entre les deux.

15. La méthode selon la revendication 14, comprenant en outre les étapes de :
mise en place d'un élément en coupelle étant le dispositif de retenue (62), l'élément en coupelle présentant une surface latérale (66) exposée vers une surface intérieure (36) de la première chambre (30).

16. La méthode selon la revendication 15, comprenant en outre les étapes suivantes :
application d'un dépôt (68) comprenant un additif lubrifiant sur la surface latérale (66).

17. La méthode selon la revendication 15, comprenant en outre l'étape de mise en place de la coupelle de retenue (62) ayant une face (64) en contact avec le diaphragme (50), la face (64) présentant une zone de contact plus petite que la surface utile du diaphragme (50).

18. La méthode selon la revendication 14, comprenant en outre l'étape de mise en place d'une bague d'espacement (80) à l'intérieur de la seconde chambre (40), ladite bague d'espacement maintenant une surface utile maximale du diaphragme (50).

19. La méthode selon la revendication 14, comprenant en outre l'étape d'application d'au moins l'un des agents suivants étant une huile, une graisse et un additif lubrifiant incorporé au matériau, en guise de lubrifiant.

20. La méthode selon la revendication 14, comprenant en outre les étapes de :
composition de la première chambre (30) à l'aide d'un premier élément du logement ;
composition de la seconde chambre (40) à l'aide d'un second élément du logement ; et
mise en place d'une portion de soutien (92) d'un collier de serrage (90) entre une première collerette du premier élément et une seconde collerette du second élément, de telle sorte que plusieurs éléments de retenues (94) du collier de serrage (90) s'étendent de l'élément de support vers l'ouverture d'admission du carburant (72).
